# EUROPEAN PATENT APPLICATION

(11) **EP 3 957 556 A1**
(43) Date of publication of application: **23.02.2022**
(21) Application number: 21188889.6
(22) Date of filing: 30.07.2021
(51) Int. Cl.: B62K 5/10, B62K 5/08, B62K 7/04, B62K 5/02

(54) **FRONT TWO-WHEELED VEHICLE**

(30) Priority: 30.07.2020 JP 2020129766
(71) Applicant: Kawasaki Jukogyo Kabushiki Kaisha, Kobe-shi, Hyogo 650-8670 (JP)
(72) Inventor: IWAMOTO, Taro, Kobe-shi, Hyogo 650-8670 (JP); NAKAJIMA, Takeshi, Kobe-shi, Hyogo 650-8670 (JP); ISHII, Hiroshi, Kobe-shi, Hyogo 650-8670 (JP); NAGASAKA, Kazuya, Kobe-shi, Hyogo 650-8670 (JP); INABA, Taichi, Kobe-shi, Hyogo 650-8670 (JP)
(74) Representative: Qip Patentanwälte Dr. Kuehn & Partner mbB

(57) **Abstract**

[Problem] To provide a front two-wheeled vehicle in which the ease of leaning of a vehicle body can be operated.

[Solution] A first front wheel provided by a front two-wheeled vehicle is located on a first side in a vehicle width direction, and a second front wheel is located on a second side in the vehicle width direction. The lean mechanism leans the first front wheel and the second front wheel in a front view in conjunction with the vehicle body leaning in the front view. When the handle is operated, the first front wheel turns around a first turning shaft located on the first side, and the second front wheel turns around a second turning shaft located on the second side. The lean brake for braking the lean mechanism includes a to-be-braked member and a caliper. The caliper contacts the to-be-braked member and brakes it. Any one of the to-be-braked member and the caliper is fixed to the frame.

## Description

### TECHNICAL FIELD

The present invention relates to a configuration of a front two-wheeled vehicle.

### BACKGROUND ART

A front two-wheeled vehicle is disclosed, for example, in PTL 1. The front two-wheel type three-wheeled bicycle of PTL 1 has a frame body. A lower suspension arm shaft which is directed in a front-rear direction is provided in a front half part of the frame body. When the steering handle is turned to the left, for example, the front wheels are turned to the left side and the frame body is forced to lean to the left side around the part of the lower suspension arm shaft. PTL 1 states that this provides a frame body tilt that is similar to the sensation of a two-wheeled vehicle when cornering.

### PRIOR-ART DOCUMENTS

### PATENT DOCUMENTS

PTL 1: Japanese Unexamined Patent Application Publication No. 2001-010577

### SUMMARY OF THE INVENTION

### PROBLEMS TO BE SOLVED BY THE INVENTION

However, the configuration of PTL 1 described above cannot be switched between allowing and preventing leaning of the vehicle body as needed. Therefore, the configuration of PTL 1 leaves room for improvement from the aspect of improving convenience.

The present invention is made in view of the circumstances described above, and an object of the present invention is to provide a front two-wheeled vehicle having a simple configuration in which the ease of leaning of the vehicle body can be operated.

### MEANS FOR SOLVING THE PROBLEMS

The problem to be solved by the present invention is as described above, and the means for solving this problem and the effects thereof are described below.

According to an aspect of the present invention, there is provided a front two-wheeled vehicle having the following configuration. That is, the front two-wheeled vehicle includes a vehicle body, a first front wheel, a second front wheel, a lean mechanism, a handle, and a lean brake. The vehicle body includes a frame. The first front wheel is located on a first side in a vehicle width direction. The second front wheel is located on a second side which is opposite to the first side in the vehicle width direction. The lean mechanism leans the first front wheel and the second front wheel in a front view in conjunction with the vehicle body leaning in the front view. The handle is operated to turn the first front wheel around the first turning shaft located on the first side and to turn the second front wheel around the second turning shaft located on the second side. The lean brake brakes the lean mechanism. The lean brake includes a to-be-braked member and a caliper. The caliper contacts the to-be-braked member and brakes the to-be-braked member. Any one of the to-be-braked member and the caliper is fixed to the frame.

This allows a configuration capable of braking the lean of the vehicle body. Since the component of the lean brake is fixed to the frame, the amount of relative movement between the frame and the component of the lean brake is reduced. Accordingly, the amount of expansion and contraction of the wire connecting the two can be suppressed, and the configuration for operating the lean brake can be simplified.

### EFFECTS OF THE INVENTION

According to the present invention, it is possible to provide a front two-wheeled vehicle having a simple configuration capable of operating the ease of leaning of the vehicle body.

### BRIEF DESCRIPTION OF THE DRAWINGS

FIG. 1 is a diagonal view showing the overall configuration of a three-wheeled bicycle in accordance with an embodiment of the present invention.
FIG. 2 is a side view of a three-wheeled bicycle.
FIG. 3 is a diagonal view of a front part of the three-wheeled bicycle.
FIG. 4 is a front view of the three-wheeled bicycle.
FIG. 5 is an enlarged front view showing the vehicle body in an upright posture.
FIG. 6 is a diagonal view showing a lean mechanism and a lean brake.
FIG. 7 is an enlarged front view showing a state in which the vehicle body is inclined when viewed from the front.
FIG. 8 is a diagonal view showing a state in which the handle is turned to the left.

### EMBODIMENT FOR CARRYING OUT THE INVENTION

Next, an embodiment of the present invention will be described with reference to the drawings. In the following description, the left-right direction of a three-wheeled bicycle 1 is defined by the direction seen from a driver riding the three-wheeled bicycle (front two-wheeled vehicle) 1. Accordingly, when the posture of the three-wheeled bicycle 1 is upright, the front-rear direction corresponds to the vehicle length direction and the left-right direction corresponds to the vehicle width direction. In addition, the up-down direction (vertical direction) corresponds to the height direction.

In this specification, when one member is "attached" to another member, it includes cases of a direct attachment as well as an indirect attachment through another member. The same applies to "fixed", "supported", and "connected".

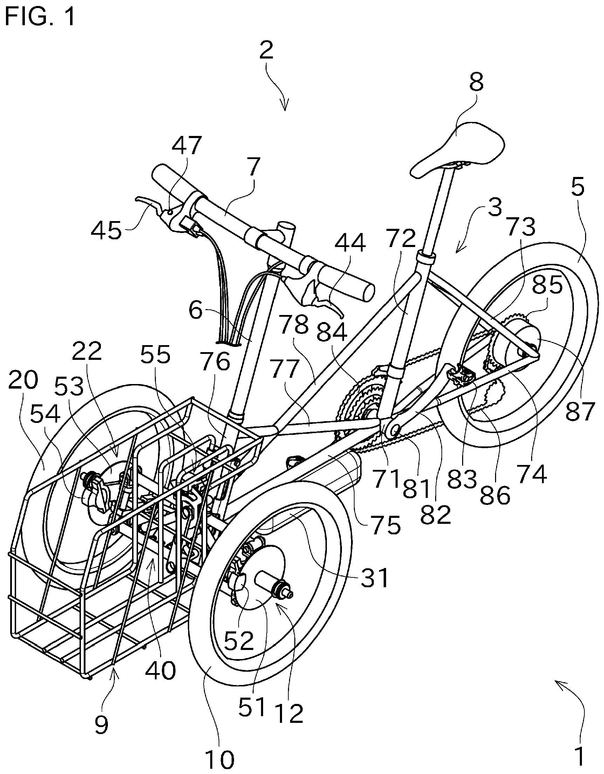

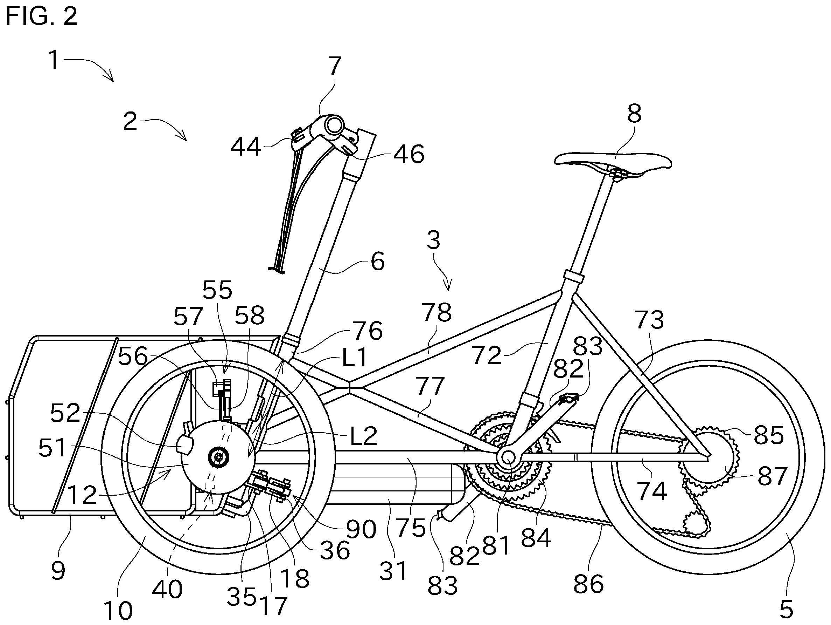

Initially, an overview of a three-wheeled bicycle (front two-wheeled vehicle) 1 will be described with reference to FIGS. 1 and 2. The three-wheeled bicycle 1 includes two front wheels 10, 20.

The three-wheeled bicycle 1 includes a vehicle body 2, a left front wheel (first front wheel) 10, a right front wheel (second front wheel) 20, and a rear wheel 5. The vehicle body 2 supports the left front wheel 10, the right front wheel 20, and the rear wheel 5. The vehicle body 2 includes a frame 3 that serves as a framework of the three-wheeled bicycle 1.

The three-wheeled bicycle 1 is a kind of lean type vehicle. A lean type vehicle means a vehicle in which the posture of the vehicle body 2 with respect to the road surface can be changed, and in which the vehicle body 2 is an inclined state with respect to the road surface as the bicycle is turned by steering. In the following, a state in which a handle 7 for steering (described below) is operated in the neutral position and the vehicle body 2 is upright against the road surface (in other words, the state of normal straight running) may be referred to as a reference state. In the following, unless otherwise explained, the description will be given assuming the reference state.

The left front wheel 10 is disposed to the left side (first side) of the center in the vehicle width direction. The right front wheel 20 is disposed to the right side (second side) of the center in the vehicle width direction. The left front wheel 10 and the right front wheel 20 are supported against the frame 3 by a lean mechanism 40. Details of the lean mechanism 40 will be described later.

The rear wheel 5 is disposed in the center of the vehicle width direction and is rotatably supported at the rear end of the frame 3.

The frame 3 will now be described. The frame 3 is disposed in the center of the width direction of the three-wheeled bicycle 1. The frame 3 is made of a plurality of frame members connected by welding or the like.

The frame 3 has a bottom cylinder part 71, a seat tube 72, seat stays 73, chain stays 74, a down tube 75, a front cylinder part 76, a first cross tube 77, and a second cross tube 78.

As used herein, "cylinder part" means a part in which a bearing rotatably supporting a shaft body is interposed and which is formed in a cylindrical shape. The term "tube" means a part formed in a solid or hollow shape.

The bottom cylinder part 71 is a member that extends in a straight line in the vehicle width direction. The bottom cylinder part 71 is formed in a cylindrical shape that is oriented in the vehicle width direction. Openings are formed on both sides of the bottom cylinder part 71 in the vehicle width direction. This bottom cylinder part 71 may be referred to as a bottom bracket shell. A crank axle 81 is rotatably supported in the bottom cylinder part 71. The crank axle 81 is disposed so as to be oriented in the vehicle width direction. A pair of left and right pedals 83 are supported on both ends of the crank axle 81 via the cranks 82, respectively.

A front sprocket 84 is supported in the vicinity of the bottom cylinder part 71. The front sprocket 84 rotates integrally with the cranks 82 and the crank axle 81.

The seat tube 72 is formed to extend in a straight line rearwardly and upwardly from the bottom cylinder part 71. A seat 8 is fixed to the upper part of the seat tube 72 via a bar-shaped seat post.

The driver can straddle the seat 8 and place his or her feet on the left and right pedals 83. Thus, the three-wheeled bicycle 1 is a type of vehicle in which the driver rides astride the seat 8 (saddle-type vehicle).

The seat stays 73 are formed to extend rearwardly and downwardly from the upper part of the seat tube 72.

The chain stays 74 are formed to extend rearwardly almost horizontally from the bottom cylinder part 71.

Each of the seat stays 73 and the chain stays 74 are arranged in pairs so as to sandwich the rear wheel 5 on the left and right sides. At each of the left side and right side, the rear ends of the seat stay 73 and the chain stay 74 are connected to each other, and the rear wheel 5 is rotatably supported at this part.

A rear sprocket 85 is attached to the rear wheel 5. A chain 86 is wound between the front sprocket 84 and the rear sprocket 85. As a result of the above, the force with which the driver steps on the pedals 83 with his feet is transmitted to the rear wheel 5, allowing the rear wheel 5 to be driven by human power.

An electric motor 87 is attached to the axle part of the rear wheel 5. By driving the electric motor 87, the rear wheel 5 can be assisted to be driven by human power. The electric motor 87 may be used as a drive source to make the three-wheeled bicycle 1 selfpropelled without human power. The electric motor 87 may be used as a generator.

The down tube 75 is a straight part that is oriented approximately horizontally. The down tube 75 is formed to extend in a straight line forwardly from the bottom cylinder part 71. The down tube 75 is connected to the front cylinder part 76 disposed at the front end of the frame 3.

The down tube 75 extends in a front-rear direction so as to connect the bottom cylinder part 71 and the front cylinder part 76. In the present embodiment, in a side view, the axis of the down tube 75 is disposed on the same axis as the axis of the chain stay 74. In the present embodiment, the axis of the down tube 75, the axis of the front wheel 10, and the axis of the crank axle 81 are arranged to be included in a common horizontal plane. This allows the structure in which the load can be easily transmitted from the rear wheel 5 to the front and the load can be easily transmitted from the front wheels 10 and 20 to the rear.

A battery 31 is fixed to the lower part of the down tube 75 in a suspended manner. This battery 31 supplies electric power to the electric motor 87.

The battery 31 is disposed between the bottom cylinder part 71 and the front cylinder part 76. In this example, the battery 31 is formed in a box shape having a longitudinal direction. The center of the battery 31 in the vehicle width direction is disposed along the center of the vehicle body 2 in the vehicle width direction. In this manner, the center of gravity of the battery 31 is positioned at the center of the vehicle body 2 in the vehicle width direction and below the down tube 75 and the crank axle 81. As a result, a low center of gravity can be achieved.

The low center of gravity of the vehicle body 2 allows the vehicle body 2 to be well stabilized even if a power source such as the electric motor 87 is provided and even if the vehicle is loaded with luggage. Since the center of gravity can be brought closer to the road surface on which the front wheels 10, 20 and the rear wheel 5 touch the ground, the moment required to lean the vehicle body 2 can be reduced. Accordingly, the vehicle body 2 can be configured to be easily leaned.

In the present embodiment, the battery 31 is located, with respect to the vehicle width direction, more inwardly in the vehicle width direction than the surfaces facing inwardly in the vehicle width direction of the left and right cranks 82. In a side view, the rear end of the battery 31 is located rearward to the front end of the rotation path of the pedals 83. In a side view, the front end of the battery 31 is located forward of the rear ends of the left and right front wheels 10, 20. The battery 31 is disposed parallel to the down tube 75 so that the longitudinal direction of the battery 31 is along the axis of the down tube 75. The lower end surface of the battery 31 is located above the lower end of a steering bracket 35 described later.

The front cylinder part 76 is an elongated cylindrical part that extends in a straight line in the up-down direction. The front cylinder part 76 is disposed so as to be in a slightly backwardly inclined posture. That is, the front cylinder part 76 extends in a rearwardly inclined manner as it proceeds upwardly from the lower end. The angle of the front cylinder part 76 in a side view is arbitrary and, for example, can be directed vertically. The front cylinder part 76 is located rearward to the axles of the left and right front wheels 10, 20. The front cylinder part 76 has a lower part extending downwardly with respect to a connection position with the down tube 75 and an upper part extending upwardly with respect to the connection position. In the present embodiment, the front cylinder part 76 extends parallel to the seat tube 72.

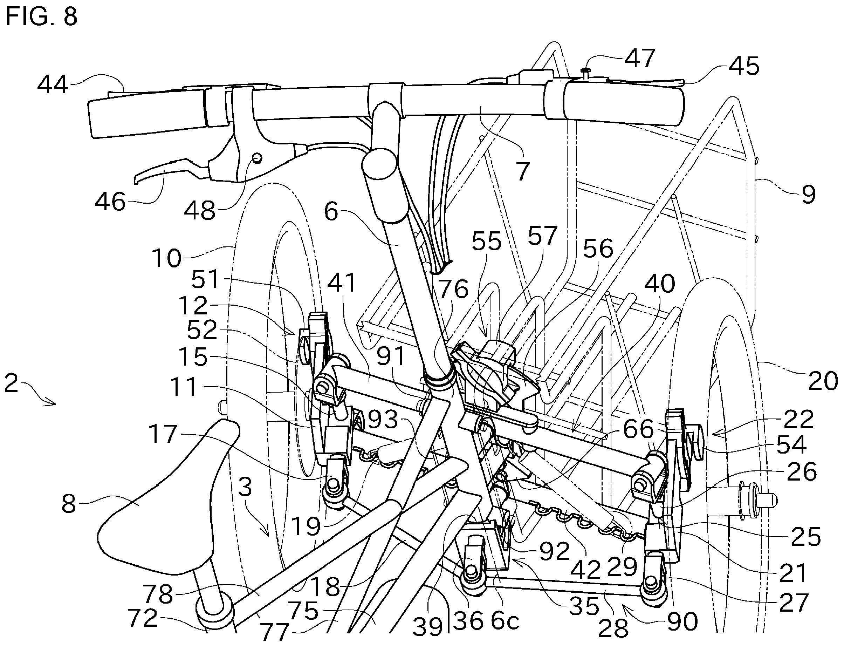

The front cylinder part 76 is located between the left front wheel 10 and the right front wheel 20. A luggage basket 9 is fixed to the front cylinder part 76. The luggage basket 9 is disposed in front of the frame 3. The front cylinder part 76 has an upper support position for supporting the luggage basket 9 above the connection with the down tube 75, and a lower support position for supporting the luggage basket 9 below the connection with the down tube 75. As will be described in detail later, the upper support position corresponds to first bosses 91 shown in FIG. 8, and the lower support position corresponds to second bosses 92. As a result, the luggage basket 9 can be stably supported.

The front cylinder part 76 is located between the left front wheel 10 and the right front wheel 20. The luggage basket 9 is fixed to the front cylinder part 76. The luggage basket 9 is disposed in front of the frame 3.

A lower part of a steering transmission shaft 6 is inserted into the front cylinder part 76. The steering transmission shaft 6 is rotatably supported by the front cylinder part 76. A handle 7 is attached to the upper part of the steering transmission shaft 6. The handle 7 is formed in a bar shape (bar handle), and the center part in the left-right direction thereof is fixed to the upper end of the steering transmission shaft 6. The driver can grasp the handle 7 with his hand and operate it for steering. The lower part of the steering transmission shaft 6 is disposed projecting downwardly from the lower end of the front cylinder part 76. The steering transmission shaft 6 is rotated about the axis of the front cylinder part 76 with respect to the front cylinder part 76 by operation of the driver to rotate the handle 7.

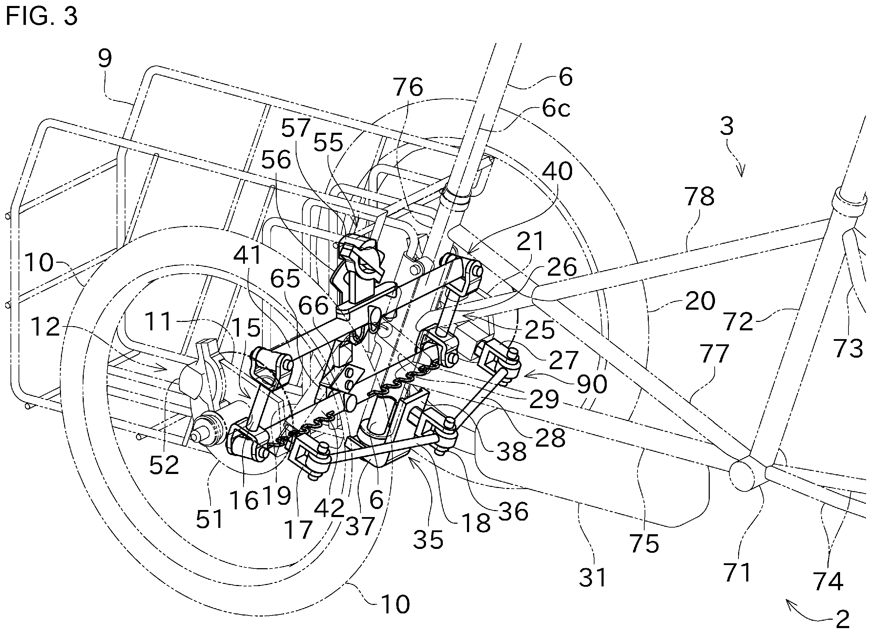

As shown in FIG. 3, a steering bracket (steering rotation section) 35 is fixed to the lower end of the steering transmission shaft 6. When the handle 7 is rotated, the steering bracket 35 rotates integrally with the steering transmission shaft 6.

The steering bracket 35 is formed in an approximately L shape. Specifically, the steering bracket 35 has a connecting part 37 that is attached to the lower end of the steering transmission shaft 6, and a bent part 38 that bends upward from the rear end of the connecting part. The connecting part 37 extends along a plane perpendicular to the axis of the front cylinder part 76. In the steering neutral state of the handle 7, the connecting part 37 extends rearwardly along the center of the vehicle body from the steering transmission shaft 6. The bent part 38 extends upwardly from the connecting part 37. The upper end surface of the bent part 38 is located below the lower surface of the down tube 75. The bent part 38 is disposed with respect to the front cylinder part 76 at a radial distance from the front cylinder part 76. This prevents interference between the bent part 38 and the frame 3 when the bent part 38 rotates with the steering transmission shaft 6. Specifically, the bent part 38 can prevent interference with luggage basket support bosses (the second bosses 92 shown in FIG. 8) formed in the front cylinder part 76 and projecting in the vehicle width direction.

A steering drive arm 36 is attached to the rear of the steering bracket 35. The steering drive arm 36 is arranged to project rearwardly from the bent part 38 of the steering bracket 35. The bent part 38 is disposed in a position where it is partially hidden by the front cylinder part 76 in a front view in the steering neutral state of the handle 7. This allows the bent part 38 to be protected from collisions with obstacles.

The steering drive arm 36 constitutes a steering link mechanism 90 shown in FIG. 3 and elsewhere. The steering link mechanism 90 can turn the left front wheel 10 and the right front wheel 20 in conjunction with the rotation of the steering transmission shaft 6 (the steering bracket 35). The detailed configuration of the steering link mechanism 90 will be described later.

The first cross tube 77 is a straight member. The first cross tube 77 extends forward and upward from the bottom cylinder part 71 and connects to the upper part of the front cylinder part 76. The first cross tube 77, the down tube 75, and the front cylinder part 76 form a triangular frame in a side view.

In the present embodiment, in the aforementioned reference state, the connection position of the first cross tube 77 and the front cylinder part 76 is located above the rim to which the rubber tires of the front wheels 10 and 20 are mounted. In the reference state, in a side view, the first cross tube extends along a tangent line which is tangent to the front wheels 10, 20. However, the arrangement of the first cross tube 77 is not limited.

The second cross tube 78 is a straight member and is disposed in a different orientation from the first cross tube 77 in a side view. The second cross tube 78 extends forward and downward from the upper part of the seat tube 72 and connects to a vertically intermediate part of the front cylinder part 76.

The second cross tube 78 is connected to the seat tube 72 at a position above the connection position between the first cross tube 77 and the front cylinder part 76. The connection position between the second cross tube 78 and the front cylinder part 76 is located below the connection position between the first cross tube 77 and the front cylinder part 76 and located above the connection position between the down tube 75 and the front cylinder part 76. In this embodiment, as shown in FIG. 2, with respect to the front cylinder part 76, the distance L1 between the connection position of the second cross tube 78 and the connection position of the first cross tube 77 is greater than the distance L2 between the connection position of the second cross tube 78 and the connection position of the down tube 75 (L1 > L2). This allows the triangle to be easily formed using the second cross tube 78, the down tube 75, and the front cylinder part 76. The height of the connection position between the second cross tube 78 and the seat tube 72 is the same as the height of the connection position between the seat stay 73 and the seat tube 72. This allows a load distribution effect to be obtained.

The first cross tube 77 and the second cross tube 78 are arranged to intersect each other and are connected to each other at this intersection. The first cross tube 77, the down tube 75, and the front cylinder part 76 form a triangular frame. The second cross tube 78, the down tube 75, and the seat tube 72 form a triangular frame. This realizes increased rigidity by the truss structure.

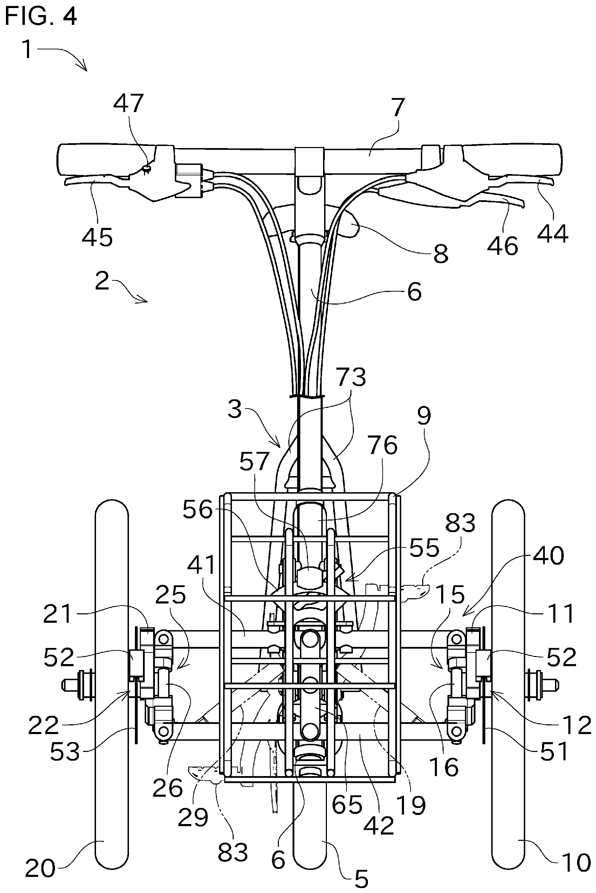

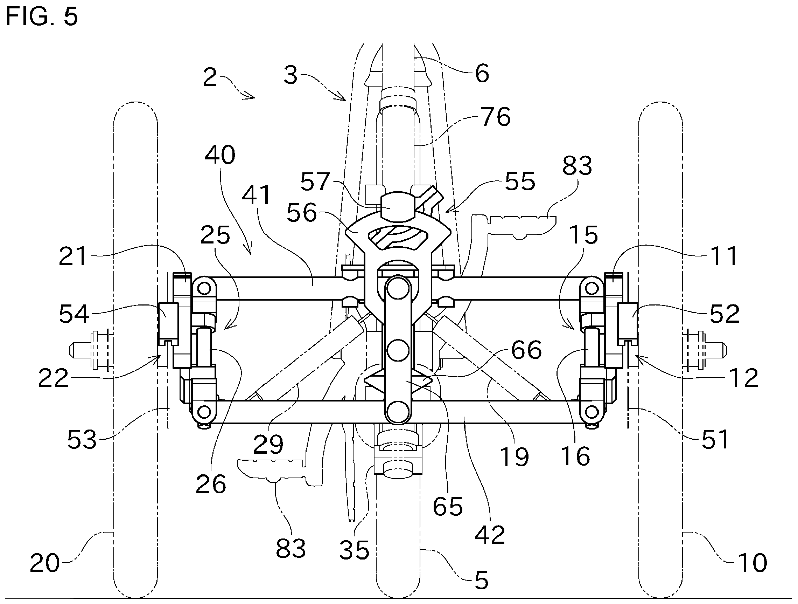

As shown in FIGS. 3, 4, and 5, the left front wheel 10 is rotatably supported around a rotation axis which is set in the left knuckle member (first knuckle member) 11. Accordingly, the left knuckle member 11 is a support for the left front wheel 10. The posture of the left knuckle member 11 is set so that the rotation axis which is set in the left knuckle member 11 (in other words, the axle of the left front wheel 10) extends in the vehicle width direction in the reference state. FIGS. 4 and 5 are front views. In FIG. 5 which is an enlarged view, the luggage basket 9 provided by the three-wheeled bicycle 1 is omitted. The left knuckle member 11 is disposed in the inner side of the vehicle width direction than the left front wheel 10.

A left brake (first front wheel brake mechanism, front wheel brake mechanism) 12 is disposed on the left front wheel 10. The left brake 12 is disposed on a side closer to the center of the vehicle width direction than the left front wheel 10.

The left brake 12 includes a left brake disc 51 and a left brake caliper (first brake caliper) 52. The left brake disc 51 is fixed to the left front wheel 10. The left brake caliper 52 is fixed to a front part of the left knuckle member 11. The left brake 12 makes the left brake caliper 52 clasp the left brake disc 51 which rotates integrally with the left front wheel 10 so as to brake the left front wheel 10.

The left knuckle member 11 is attached to a left link 15 provided by the lean mechanism 40 described below. The left knuckle member 11 is rotatably supported on a left kingpin shaft (first turning shaft) 16 that the left link 15 has. Accordingly, the left front wheel 10 is capable of turning around the left kingpin shaft 16. As shown in FIG. 3, the left kingpin shaft 16 is arranged so as to be in a slightly backwardly tilted orientation. In this embodiment, the left kingpin shaft 16 is parallel to the steering transmission shaft 6.

As shown in FIG. 3, a left knuckle arm 17 is attached to the rear part of the left knuckle member 11. The left knuckle arm 17 is disposed so as to protrude rearwardly from the left knuckle member 11. In other words, in the left knuckle member 11, a brake caliper support part is formed forward to the left kingpin shaft 16 and a knuckle arm support part is formed rearward to the left kingpin shaft 16. With the steering transmission shaft 6 being inclined, the knuckle arm support part is located lower than the brake caliper support part.

The left knuckle arm 17 is connected to the aforementioned steering drive arm 36 via a left tie rod 18. Accordingly, the steering drive arm 36 pushes and pulls the left knuckle arm 17 via the left tie rod 18 to turn the left knuckle member 11 and the left front wheel 10.

Specifically, when the steering drive arm 36 moves to the right side with respect to the center of the vehicle body due to steering by the driver, the steering drive arm 36 moves away from the left knuckle arm 17. In this case, the steering drive arm 36 pulls the left knuckle arm 17 via the left tie rod 18. The left front wheel 10 changes its direction around the left kingpin shaft 16 together with the left knuckle member 11 and the front end of the left front wheel 10 faces left.

On the other hand, when the steering drive arm 36 moves to the left side with respect to the center of the vehicle body due to steering by the driver, the steering drive arm 36 approaches the left knuckle arm 17. In this case, the steering drive arm 36 pushes the left knuckle arm 17 via the left tie rod 18. The left front wheel 10 changes its orientation around the left kingpin shaft 16 together with the left knuckle member 11 and the front end of the left front wheel 10 faces right.

Since the configuration of the front part of the vehicle is substantially symmetrical, the configuration with respect to the right front wheel 20 will be briefly described below. As shown in FIG. 5 and the like, on the right side of the front of the three-wheeled bicycle 1, a right knuckle member (second knuckle member) 21, a right brake (second front wheel brake mechanism, front wheel brake mechanism) 22, and a right link 25 are disposed, in addition to the right front wheel 20. The right brake 22 includes a right brake disc 53 and a right brake caliper (second brake caliper) 54. The right link 25 includes a right kingpin shaft (second turning shaft) 26. As shown in FIG. 3, a right knuckle arm 27 is mounted at the rear of the right knuckle member 21. The right knuckle arm 27 is connected to the steering drive arm 36 via a right tie rod 28.

As shown in FIG. 2, the lean mechanism 40 is disposed in front of the frame 3. The lean mechanism 40 is disposed forward of the front cylinder part 76. The lean mechanism 40 is configured as a parallel link mechanism. As shown in FIG. 5 and the like, the lean mechanism 40 has an upper link (rotation link) 41, a lower link (rotation link) 42, the left link 15, the right link 25.

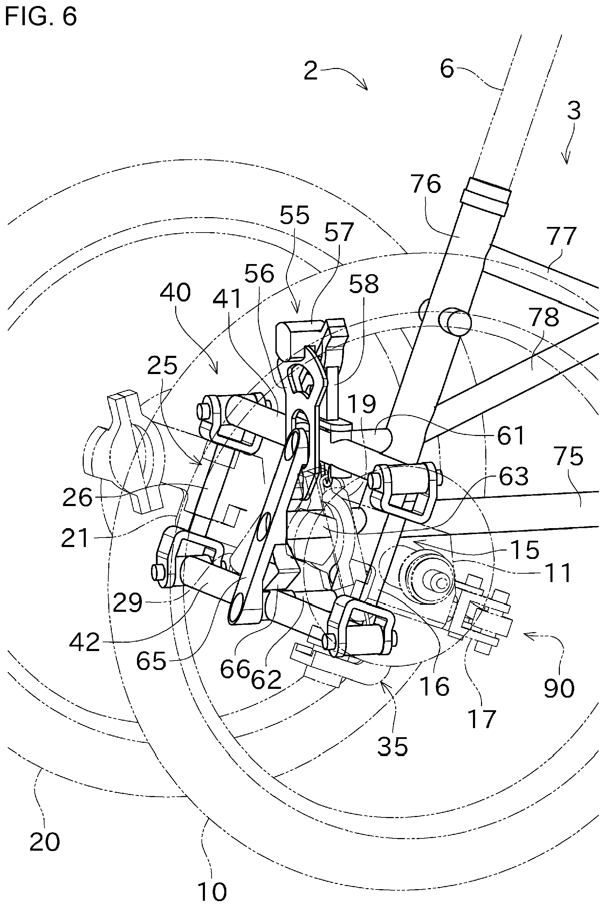

As shown in FIG. 6, the front cylinder part 76 provided by the frame 3 includes an upper support shaft 61 and a lower support shaft 62. A connecting part 63 is provided at a position between the upper support shaft 61 and the lower support shaft 62. In FIG. 3, the upper support shaft 61, the lower support shaft 62, and the connecting part 63 are omitted. As shown in FIG. 6, the upper support shaft 61, the lower support shaft 62, and the connecting part 63 are all formed elongated in the front-rear direction and are directed so as to project horizontally forward from the front cylinder part 76. The directions in which the upper support shaft 61, the lower support shaft 62, and the connecting part 63 project are parallel. An appropriate interval is spaced between the upper support shaft 61 and the lower support shaft 62.

The vertical distance between the upper support shaft 61 and the connecting part 63 is set to be equal to the vertical distance between the lower support shaft 62 and the connecting part 63. The upper support shaft 61 projects forward from the front surface of the front cylinder part 76 at a position corresponding to the connection position between the front cylinder part 76 and the second cross tube 78. The connecting part 63 projects forward from the front surface of the front cylinder part 76 at a position corresponding to the connection position between the front cylinder part 76 and the down tube 75. The lower support shaft 62 projects forward from the front surface of the front cylinder part 76 at a position corresponding to the steering drive arm 36.

Each of the upper link 41 and the lower link 42 is an elongated straight member. As shown in FIG. 5, the length of the upper link 41 and the length of the lower link 42 are substantially equal. In the state where the vehicle body 2 is upright, the upper link 41 and the lower link 42 are oriented in the left-right horizontal direction in the front view. The center part in the left-right direction of the upper link 41 is rotatably supported at the front end of the upper support shaft 61 around an axis which is oriented in the front-rear direction. The center part in the left-right direction of the lower link 42 is rotatably supported at the front end of the lower support shaft 62 around an axis which is oriented in the front-rear direction.

The left tie rod 18 and the right tie rod 28 are located at about the same height as the lower link 42 and rearward to the lower link 42. In other words, in the reference state shown in FIG. 6, at least a part of the left tie rod 18 and the right tie rod 28 are arranged to be hidden behind the lower link 42 in the front view. This allows the left tie rod 18 and the right tie rod 28 to be protected from collisions with foreign objects.

The left end of the upper link 41 and the left end of the lower link 42 are interconnected by the left link 15. The right end of the upper link 41 and the right end of the lower link 42 are interconnected by the right link 25. In the state where the vehicle body 2 is upright, the left link 15 and the right link 25 are oriented vertically in the front view.

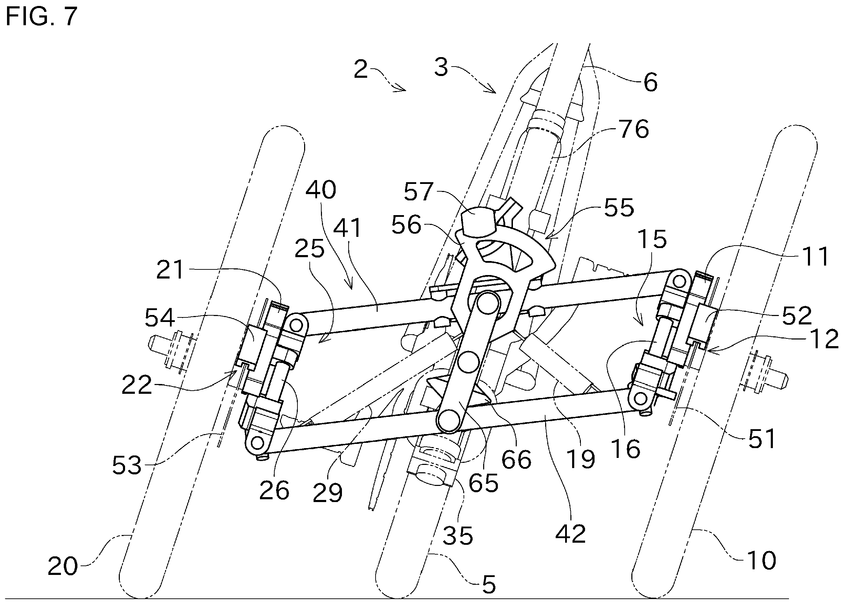

The lean mechanism 40 operates such that the posture of the frame 3, the posture of the left link 15, and the posture of the right link 25 are always parallel in the front view. In other words, in the front view, the postures of the left kingpin shaft 16 and the right kingpin shaft 26 are always parallel to the posture of the frame 3. Therefore, as shown in FIG. 7, for example, the left front wheel 10 and the right front wheel 20 can be leaned with respect to the road surface in conjunction with the vehicle body 2 (the frame 3) leaning left and right with respect to the road surface in the front view.

The fixing member 65 is an elongated member in the up-down direction in the front view, as shown in FIG. 5 and the like. The fixing member 65 is disposed at the center of the lean mechanism 40 in the vehicle width direction. As shown in FIG. 6, the fixing member 65 is fixed to the front ends of the upper support shaft 61, the lower support shaft 62, and the connecting part 63. This allows the rigidity of the part supporting the upper link 41 and the lower link 42 to be increased. The fixing member 65 is disposed parallel to the front cylinder part 76.

A restriction member 66 is fixed to a surface of the lower part of the fixing member 65. As shown in FIG. 3 and the like, the restriction member 66 is proximate above the center part in the left-right direction of the lower link 42. As shown in FIG. 5, the lower part of the restriction member 66 is formed in a V shape that is symmetrical in the front view. When the lower link 42 rotates and reaches a predetermined restriction angle, it contacts the V-shaped surface of the restriction member 66. As a result, the operation angle range of the lean mechanism 40 described above can be restricted. The contact between the restriction member 66 and the lower link 42 can be a point contact, a line contact, or a surface contact. In the case of a line contact or a surface contact, the load at the time of the contact can be prevented from being concentrated at one point.

For example, as shown in FIG. 3, a pair of lean return springs (biasing members) 19, 29 are disposed so as to connect the vicinity of a center of rotation of the upper link 41 to a position remote from a center of rotation of the lower link 42. The lean return springs 19, 29 are configured as tensile coil springs. As can be seen by comparing FIGS. 5 and 7, when the vehicle body 2 leans from an upright posture to either the left or right, the four-sided shape formed by the parallel links of the lean mechanism 40 is deformed. As a result, the tension of one of the two lean return springs 19, 29 is strengthened and the tension of the other is loosened. The lean return spring whose tension is strengthened (the right side lean return spring 29 in the example of FIG. 7) applies a stronger restoration force to the lean mechanism 40 than the opposite side. This makes it easier to return the vehicle body 2 to an upright posture.

As shown in FIG. 8, the lower link 42 has a plurality of parts spaced apart and aligned in the vehicle width direction that can hook the lean return springs 19, 29. The length of the lean return springs 19, 29 in the upright state of the vehicle body 2 can be changed by selecting a position to attach the lean return springs 19, 29. With this configuration, the magnitude of the restoration force generated by the lean return springs 19, 29 can be adjusted.

A lean brake 55 is disposed at the upper part of the lean mechanism 40. The lean brake 55 has a brake plate (to-be-braked member) 56 and a brake caliper (caliper) 57.

The brake plate 56 is fixed to the frame 3. Specifically, as shown in FIG. 6, the lower part of the brake plate 56 is fixed to the rear of the upper part of the fixing member 65. In a side view, the brake plate 56 is arranged to be in an upright posture along the vertical direction. The brake plate 56 is positioned forward of the upper link 41.

A to-be-braked surface that is to be clasped by the brake caliper 57 is disposed at the upper part of the brake plate 56. The to-be-braked surface is formed in the form of an arc around the rotation axis of the upper link 41. A through-shaped insertion hole is formed in the lower part of the brake plate 56, and the upper support shaft 61 passes through the insertion hole. This allows the upper part (in other words, the to-be-braked surface) of the brake plate 56 to be arranged so that it is higher than the upper link 41 while the lower end of the brake plate 56 is fixed to the side of the frame 3.

The to-be-braked surface of the brake plate 56 is disposed higher than the upper link 41. Therefore, it is easier to use the space above the lean mechanism 40 to increase the diameter of the arc-shaped to-be-braked surface. This makes it easy to enhance the braking force of the lean brake 55.

The brake caliper 57 is mounted to the upper link 41 so that it rotates integrally with the upper link 41. Specifically, a caliper bracket 58 is fixed to the center of the upper link 41 in the vehicle width direction so as to protrude upwardly. The brake caliper 57 is fixed to the upper part of this caliper bracket 58. The brake caliper 57 is disposed at a higher position than the upper link 41.

In the present embodiment, the front cylinder part 76 is arranged to be inclined rearwardly as it proceeds upwardly. Accordingly, the space above the upper link 41 can be formed wider, and the brake caliper 57 can be arranged more easily. In addition, by arranging the brake caliper 57 above the upper link 41, it is possible to suppress foreign objects such as pebbles from colliding with the brake caliper 57.

When the vehicle body 2 leans, the upper link 41 rotates relative to the frame 3, which causes the brake caliper 57 to rotate relative to the brake plate 56. By braking this relative rotation, the lean brake 55 can make the vehicle body 2 less likely to lean. By strongly operating the lean brake 55, the leaning of the vehicle body 2 can also be prevented (locked).

Next, the luggage basket 9 will be described. As shown in FIG. 1, the luggage basket 9 is located in front of the frame 3, in the center of the vehicle width. A part of the luggage basket 9 is inserted between the left front wheel 10 and the right front wheel 20.

As shown in FIG. 2, in the state where the vehicle body 2 is upright, the lower end of the luggage basket 9 is lower than the axles of the left front wheel 10 and the right front wheel 20. This allows the position of the luggage basket 9 to be lowered, and a low center of gravity can be achieved.

Since the luggage basket 9 is fixed to the front cylinder part 76, when the vehicle body 2 leans, the luggage basket 9 leans as well. The height of the lower end of the luggage basket 9 is determined so that the luggage basket 9 does not contact the road surface even when the vehicle body 2 leans to the maximum lean angle determined by the aforementioned restriction member 66. As a result, damage to the luggage basket can be prevented.

The front end of the luggage basket 9 is located forward of the front ends of the front wheels 10, 20. This allows the capacity of the luggage basket 9 to be easily increased.

As shown in FIG. 5, the luggage basket 9 is configured to be slightly elongated in the up-down in the front view. In the state where the vehicle body 2 is upright, the left and right ends of the luggage basket 9 are located inwardly from the left link 15 and the right link 25 that the lean mechanism 40 has, in the front view. This provides space for the left front wheel 10 and the right front wheel 20 to lean and turn.

As shown in FIG. 8, stowage space is formed inside the luggage basket 9 that is open above. This stowage space is recessed so that the rear lower part is cut out in a side view. The lean mechanism 40 and the lean brake 55 are arranged in this part. In other words, the lean mechanism 40 and the lean brake 55 are arranged in the space sandwiched in front and rear by the stowage space of the luggage basket 9 and the front cylinder part 76 of the frame 3. This makes it possible to realize a compact arrangement as a whole.

The luggage basket 9 is disposed such that it faces forward and above the lean mechanism 40 and the lean brake 55. This allows the capacity of the luggage basket 9 to be increased while preventing interference with the lean mechanism 40 and the lean brake 55. The part of the luggage basket 9 that faces above the lean mechanism 40 is disposed at a position higher than the movable range of the upper link 41. Therefore, the luggage basket 9 does not interfere with the operation of the lean mechanism 40.

As shown in FIG. 8, at the upper part of the front cylinder part 76, a pair of first bosses 91 are disposed on the left and right sides. At the lower part of the front cylinder part 76, a pair of second bosses 92 are disposed on the left and right sides. Each of the first bosses 91 and the second bosses 92 is integrally formed so as to protrude in a left-right horizontal direction from the front cylinder part 76.

The luggage basket 9 is composed of a plurality of wire members made of thin bars of metal that are bent as appropriate. Some of these wire members extend rearwardly from the aforementioned stowage space and are disposed along the front cylinder part 76. The wire member is fixed to the first bosses 91 and the second bosses 92 via stays 93 which are arranged in pairs on the left and right sides. The above allows the luggage basket 9 to be fixed to the front cylinder part 76.

In a side view, some of the wire members are bent to encompass the front, top, and rear of the lean mechanism 40 and the lean brake 55. A part of the wire member that is located rearward to the lean mechanism 40 is attached to the front cylinder part 76 via the stays 93. The wire member is disposed so as to pass between the stowage space of the luggage basket 9 and the lean brake 55. Accordingly, the luggage in the luggage basket 9 can be prevented from contacting the lean brake 55.

Next, the steering link mechanism 90 will be described.

As shown in FIG. 3, the steering drive arm 36 and the left knuckle arm 17 are connected to each other by the left tie rod 18. The steering drive arm 36 and the right knuckle arm 27 are connected to each other by the right tie rod 28. Thereby, the left front wheel 10 and the right front wheel 20 can be turned according to the rotation of the handle 7. FIG. 8 shows the state in which the handle 7 is turned to the left.

The steering drive arm 36 is rotatable about an axis perpendicular to a center of rotation 6c of the steering transmission shaft 6. The left knuckle arm 17 is rotatable about an axis perpendicular to the left kingpin shaft 16. The right knuckle arm 27 is rotatable around an axis perpendicular to the right kingpin shaft 26. As described above, the steering drive arm 36, the left knuckle arm 17, and the right knuckle arm 27 function as a substantially free joint. Accordingly, even when the steering transmission shaft 6, the left kingpin shaft 16, and the right kingpin shaft 26 are leaned as the vehicle body 2 is leaned, the left tie rod 18 and the right tie rod 28 can be appropriately pushed and pulled to turn the left knuckle member 11 and the right knuckle member 21 in conjunction with the rotation of the steering bracket 35.

As shown in FIG. 8, a steering restriction member 39 is attached to the bent part 38 of the steering bracket 35. The steering restriction member 39 is disposed between the front cylinder part 76 and the bent part 38. The steering restriction member 39 is formed so as to be arc-shaped when viewed along the center of rotation 6c of the steering transmission shaft 6. When the steering bracket 35 rotates to some extent, an end part of the steering restriction member 39 contacts one of the left and right second bosses 92. As a result, the steering angle range of the handle 7 (in other words, the turning angle range of the left front wheel 10 and the right front wheel 20) can be restricted. Accordingly, the left front wheel 10 and the right front wheel 20 can be prevented from interfering with the luggage basket 9 which is located in the inner side of the vehicle width direction.

Next, various operation members attached to the handle 7 will be described.

As shown in FIG. 1, a rear brake lever 44 is supported on the left portion of the handle 7. A transmission wire is connected to the rear brake lever 44. The transmission wire is connected to a rear brake (not shown) for braking the rear wheel 5. By the driver operating the rear brake lever 44 with his left hand so as to bring it close to the grip of the handle 7, the rear brake lever 44 is switched from a release position to a brake position. By operating the rear brake lever 44 to the brake position, the rear brake can be operated to brake the rear wheel 5. The rear brake may include, for example, but is not limited to, a brake disc and a brake caliper similar to the left brake 12.

A front brake lever 45 is supported on the right part of the handle 7. Two transmission wires are connected to the front brake lever 45. One of the two transmission wires is connected to the left brake caliper 52, and the other is connected to the right brake caliper 54. By the driver operating the front brake lever 45 with his right hand so as to bring it close to the grip of the handle 7, the front brake lever 45 is switched from the release position to the brake position. By operating the front brake lever 45 to the brake position, the left brake 12 and the right brake 22 can be operated simultaneously to brake the left front wheel 10 and the right front wheel 20.

As shown in FIG. 8, a lean brake lever 46 is supported on the left portion of the handle 7. A transmission wire is connected to the lean brake lever 46. The transmission wire is connected to the brake caliper 57 of the lean brake 55. By the driver operating the lean brake lever 46 so as to bring it close to the grip of the handle 7, the lean brake lever 46 is switched from the release position to the brake position. By operating the lean brake lever 46 to the brake position, a brake can be performed so as not to change the lean angle of the left front wheel 10 and the right front wheel 20.

As mentioned above, the lean angles of the left front wheel 10 and the right front wheel 20 relative to the road surface correspond to the lean angle of the vehicle body 2 relative to the road surface. Therefore, locking the lean of the left front wheel 10 and the right front wheel by the lean brake lever 46 is synonymous with locking the posture (lean) of the vehicle body 2 with respect to the road surface.

The transmission wire is an elongated member having an inner wire and an outer tube and is flexible. The longitudinal intermediate part of the transmission wire is fixed to the vehicle body 2 (e.g., the front cylinder part 76 of the frame 3) by suitable means. Since the transmission wire has a known configuration, a detailed description is omitted.

In the present embodiment, one of the brake plate 56 and the brake caliper 57 provided by the lean brake 55 is fixed to the frame 3. Therefore, even when the left front wheel 10 and the right front wheel 20 are leaned, the distance at which the brake caliper 57 moves relative to the frame 3 is small. Therefore, for the transmission wire connecting the lean brake 55 and the lean brake lever 46, the margin length for deformation (in other words, the length between the fixing point to the frame 3 and the brake caliper 57) can be shortened. As a result, simplification of the configuration for operating the lean brake 55 can be achieved.

Although not shown in the drawings, an operation member for operating the rotation/stop of the electric motor 87 is attached to the handle 7. An instrument (not shown) is provided on the steering transmission shaft 6 or the handle 7. The driver can check the state of charge of the battery 31 and the like by the instrument.

A front brake lever lock mechanism 47 is attached to the front brake lever 45, which can lock the front brake lever 45 at the brake position. The front brake lever lock mechanism 47 can be, for example, but is not limited to, a known configuration for fixing the front brake lever 45 using a lock pin. With the front brake lever 45 operated in the brake position, the driver performs a lock operation on the front brake lever lock mechanism 47. As a result, the left front wheel 10 and the right front wheel 20 can be kept in a braked state even when the driver removes his hand from the front brake lever 45. This function can be used as a so-called parking brake.

A lean brake lever lock mechanism 48, which is substantially similar to the front brake lever lock mechanism 47, is also attached to the lean brake lever 46. The driver, with the vehicle body 2 upright and the lean brake lever 46 operated in the brake position, performs a lock operation on the lean brake lever lock mechanism 48. This allows the driver to hold the vehicle body 2 in the upright posture even when the driver removes his hand from the lean brake lever 46. Accordingly, the three-wheeled bicycle 1 can be prevented from falling over while the driver is away from the three-wheeled bicycle 1.

Next, the spokes in the left front wheel 10 and the right front wheel 20 will be described. Each of the rear wheel 5, the left front wheel 10 and the right front wheel 20 has a hub at the center of rotation side and a rim to which a rubber tire is fixed. Although not shown in the drawings, a plurality of spokes made of elongated metal are stretched to fix the hub and the rim to each other.

In this embodiment, a known method known as a reverse Italian lacing pattern is employed for the arrangement of the spokes in the left front wheel 10 and the right front wheel 20. The reverse Italian lacing pattern is a kind of assembly method called a tangent lacing pattern in which the spokes intersect each other. The reverse Italian lacing pattern is often used in disc brake type front wheel because the braking force of the disc brake (the left brake 12 or the right brake 22) can be efficiently transferred to the rim by the spokes.

With this spoke arrangement, if the left front wheel 10 and the right front wheel 20 were to be mounted on the opposite sides, the features of the reverse Italian lacing pattern could not be utilized. Therefore, a configuration is applied to each of the left front wheel 10 and the right front wheel 20 to prevent the left and right wheels from being mounted incorrectly (omitted in figures). Specifically, for example, an arrow indicating the direction of wheel rotation during forward motion may be attached to a hub or rim or the like at an appropriate location.

As described above, the three-wheeled bicycle 1 of the present embodiment includes the vehicle body 2, the left front wheel 10, the right front wheel 20, the lean mechanism 40, the handle 7, and the lean brake 55. The vehicle body 2 includes the frame 3. The left front wheel 10 is located on the left side in the vehicle width direction. The right front wheel 20 is located on the right side in the vehicle width direction. The lean mechanism 40 leans the left front wheel 10 and the right front wheel 20 in the front view in conjunction with the vehicle body 2 leaning in the front view. The handle 7 is operated to turn the left front wheel 10 around the left kingpin shaft 16 located on the left side, and to turn the right front wheel 20 around the right kingpin shaft 26 located on the right side. The lean brake 55 brakes the lean mechanism 40. The lean brake 55 includes the brake plate 56 and the brake caliper 57. The brake caliper 57 contacts the brake plate 56 and brakes the brake plate 56. One of the brake plate 56 and the brake caliper 57 is fixed to the frame 3.

This allows for a configuration capable of braking the lean of the vehicle body 2. In addition, since the component of the lean brake 55 is fixed to the frame 3, the configuration for operating the lean brake 55 can be simplified. Specifically, in the case where the middle part of the transmission wire connecting the lean brake lever 46 and the brake caliper 57 is fixed to the frame 3, the transmission wire can be shortened.

The three-wheeled bicycle 1 of this embodiment includes the lean brake lever 46 and the lean brake lever lock mechanism 48. The lean brake lever 46 is operated to operate the lean brake 55. The lean brake lever lock mechanism 48 is capable of fixing the lean brake lever 46 at the operating position (brake position) for operating the lean brake 55 to brake.

This allows the driver to leave the three-wheeled bicycle 1 while the posture of the vehicle body 2 is locked. Thus, the convenience can be enhanced.

In the three-wheeled bicycle 1 of this embodiment, the lean mechanism 40 includes the lean return springs 19, 29. The lean return springs 19, 29 exert a biasing force that acts in a direction to return the left front wheel 10 and the right front wheel 20 from the inclined state to the upright state in the front view.

This makes it easier to return the left front wheel 10 and the right front wheel 20 from the lean state. Accordingly, a good driving feeling can be obtained.

In the three-wheeled bicycle 1 of the present embodiment, the lean mechanism 40 includes the restriction member 66 that regulates the leaning of the left front wheel 10 and the right front wheel 20.

This prevents excessive leaning of the left front wheel 10 and the right front wheel 20.

In the three-wheeled bicycle 1 of this embodiment, the brake plate 56 and the brake caliper 57 are located forward of the frame 3.

This allows for a configuration in which the lean brake 55 is less likely to interfere with the frame 3 or the like.

In the three-wheeled bicycle 1 of the present embodiment, the lean mechanism 40 is configured as a parallel link mechanism. The parallel link mechanism includes the upper link 41 that is rotatable in the front view. The brake plate 56 is mounted to the frame 3. The brake caliper 57 is mounted to the upper link 41.

Because the brake plate 56 is mounted to the frame 3, the brake caliper 57 is also disposed in the vicinity of the frame 3. Accordingly, in the transmission wire for operating the brake caliper 57, the length from the part fixed to the frame 3 to the brake caliper 57 can be reduced.

In the three-wheeled bicycle 1 of this embodiment, the parallel link mechanism includes the upper link 41 and the lower link 42 that rotate respectively in the front view. The upper link 41 and the lower link 42 are aligned in the vertical direction. The brake caliper 57 is disposed above the upper link 41.

As a result, the space above the lean mechanism 40 can be utilized to increase the diameter of the braking surface of the brake plate 56. As a result, the lean brake 55 having a strong braking force can be easily realized.

The three-wheeled bicycle 1 of this embodiment includes the left brake 12, the right brake 22, the front brake lever 45, and the front brake lever lock mechanism 47. The left brake 12 brakes the left front wheel 10. The right brake 22 brakes the right front wheel 20. The front brake lever 45 is operated to operate the left brake 12 and the right brake 22. The front brake lever lock mechanism 47 is capable of locking the front brake lever 45 at the operating position (brake position) for operating the left brake 12 and the right brake 22 to brake.

This allows the driver to leave the three-wheeled bicycle 1 with the left front wheel 10 and the right front wheel 20 being braked. Thus, for example, parking on an inclined surface becomes easier.

Although the preferred embodiment and the modifications of the present invention have been described above, the configurations described above may be modified as follows, for example.

The brake plate 56 may be arranged so as to project lower than the lower link 42 in the front view. In this case, the to-be-braked surface of the brake plate 56 and the brake caliper 57 are disposed at a lower position than the lower link 42. The brake caliper 57 is fixed to the lower link 42 so that it rotates integrally with the lower link 42.

Of the lean brake 55, the brake plate 56 may be fixed to the upper link 41 and the brake caliper 57 may be fixed to the frame 3.

The brake plate 56 and the brake caliper 57 may be located rearward to the front cylinder part 76 of the frame 3.

At least any of the front brake lever lock mechanism 47 and the lean brake lever lock mechanism 48 may be omitted.

The lean return springs 19, 29 may be omitted from the lean mechanism 40.

The three-wheeled bicycle 1 may be converted to a four-wheeled bicycle having one rear wheel 5 on each of left and right sides.

Any one of the left brake 12 and the right brake 22 may be omitted, and the front brake lever 45 may be configured to operate only one front brake which is located on the left side or the right side.

The electric motor 87 as the drive source may be disposed at another position instead of the axle part of the rear wheel 5. For example, the electric motor 87 may be located at the part of the crank axle 81. The electric motor 87 may be disposed between the crank axle 81 and the axle of the rear wheel 5 in the front-rear direction.

The material and shape of the frame 3 can be modified in various ways. For example, the down tube 75 may be formed in a curved manner, or may be formed so that it is inclined upwardly or downwardly as it proceeds forwardly from the bottom cylinder part 71.

In particular, in the part rearward to the crank axle 81, various structures may be used, such as those applied to existing bicycles.

The electric motor 87, the battery 31, the controller, and the like may be omitted, and the bicycle may be configured as a front two-wheeled bicycle that runs only by human power.

### DESCRIPTION OF THE REFERENCE NUMERALS

- 1: three-wheel type bicycle (front two-wheeled bicycle)
- 2: vehicle body
- 3: frame
- 7: handle
- 10: left front wheel (first front wheel)
- 12: left brake (first front wheel brake mechanism)
- 16: left kingpin shaft (first turning shaft)
- 19, 29: lean return spring (biasing member)
- 20: right front wheel (second front wheel)
- 22: right brake (second front wheel brake mechanism)
- 26: right kingpin axis (second turning shaft)
- 40: lean mechanism
- 45: front brake lever
- 46: lean brake lever
- 47: front brake lever lock mechanism
- 48: lean brake lever lock mechanism
- 55: lean brake
- 56: brake plate (to-be-braked member)
- 57: brake caliper (caliper)
- 66: restriction member

## Claims

1. A front two-wheeled vehicle comprising:
a vehicle body including a frame;
a first front wheel located on a first side in a vehicle width direction;
a second front wheel located on a second side which is opposite to the first side in the vehicle width direction;
a lean mechanism that leans the first front wheel and the second front wheel in a front view in conjunction with the vehicle body leaning in the front view;
a handle to be operated to turn the first front wheel around a first turning shaft located on the first side and to turn the second front wheel around a second turning shaft located on the second side; and
a lean brake for braking the lean mechanism, wherein
the lean brake comprises:
a to-be-braked member; and
a caliper that contacts the to-be-braked member and brakes the to-be-braked member, and
any one of the to-be-braked member and the caliper is fixed to the frame.

2. The front two-wheeled vehicle according to claim 1, comprising:
a lean brake lever that is operated to operate the lean brake; and
a lean brake lever lock mechanism capable of locking the lean brake lever in an operating position for operating the lean brake to brake.

3. The front two-wheeled vehicle according to claim 1 or 2, wherein the lean mechanism comprises a biasing member that exerts a biasing force acting in a direction to return the first front wheel and the second front wheel from an inclined state to an upright state in the front view.

4. The front two-wheeled vehicle according to any one of claims 1 to 3, wherein
the lean mechanism comprises a restriction member that restricts a leaning of the first front wheel and the second front wheel.

5. The front two-wheeled vehicle according to any one of claims 1 to 4, wherein the to-be-braked member and the caliper are located forward of the frame.

6. The front two-wheeled vehicle according to any one of claims 1 to 5, wherein
the lean mechanism is configured as a parallel link mechanism,
the parallel link mechanism comprises a rotation link that is rotatable in the front view,
the to-be-braked member is mounted to the frame, and
the caliper is mounted to the rotation link.

7. The front two-wheeled vehicle according to claim 6, wherein
the parallel link mechanism comprises a plurality of the rotation links which are lined up in a vertical direction, and
the caliper is disposed above the topmost rotation link.

8. The front two-wheeled vehicle according to any one of claims 1 to 7, comprising:
a front wheel brake mechanism for braking at least one of the first front wheel and the second front wheel;
a front brake lever that is operated to operate the front wheel brake mechanism; and
a front brake lever lock mechanism capable of locking the front brake lever in an operating position for operating the front wheel brake mechanism to brake.
